# EUROPÄISCHE PATENTANMELDUNG

(11) **EP 0 525 794 A1**
(43) Veröffentlichungstag der Anmeldung: **03.02.1993**
(21) Anmeldenummer: 92113095.1
(22) Anmeldetag: 31.07.1992
(51) Int. Cl.: B65G 47/14

(54) **Vorrichtung zum Ordnen bzw. Ausrichten von schüttfähigen Kleinteilen**

(30) Priorität: 02.08.1991 HU 1852991
(71) Anmelder: ORIMAT AUTOMATISIERUNGS AG, H-8201 Veszprém (HU)
(72) Erfinder: Kovács, Tibor, H-8200 Veszprém (HU); Baksa, István, H-8200 Veszprém (HU); Maár, Márton, H-8200 Veszprém (HU); Farkas, István, H-8200 Veszprém (HU); Szabó, Gyula, H-1039 Budapest (HU)
(74) Vertreter: Klingseisen, Franz, Dipl.-Ing.

(57) **Zusammenfassung**

Bei einer Vorrichtung zum Ordnen bzw. Ausrichten von schüttfähigen Kleinteilen mit einem mit Schikanen ausgerüsteten Schwingtopf und Ordnungselementen an dem Schwingtopf sind zur leichteren Umstellung der Vorrichtung auf eine andere Art von zu ordnenden Kleinteilen am Schwingtopf (1) befestigbare Ordnungselemente (2,3,4,5) vorgesehen, die mit einem durch einen Elektromotor (15) verstellbaren Schieber (12) in den Schwingtopf hineinragen. Diese Ordnungselemente sind an eine elektronische Steuereinrichtung (8) angeschlossen, die durch ein Programmiergerät (9) programmierbar ist. Durch die elektronische Steuereinrichtung kann auch eine pneumatische Abblaseinrichtung (7) und eine Einheit (5) für die Form- und/oder Farberkennung gesteuert werden.

## Beschreibung

Die Erfindung betrifft eine Vorrichtung zum Ordnen bzw. Ausrichten von schüttfähigen Kleinteilen nach dem Oberbegriff des Anspruchs 1.

Bei automatisierter Montage von Geräten und dergleichen sind zum Zuführen, Sortieren und Dosieren der als Schüttgut zur Verfügung stehenden Einzelteile sowie zum Bestücken der robotertechnischen Einheiten und Manipulatoren verschiedene Ordnungs- und Zuführungseinheiten vorgesehen, die als Roboterperipherie bezeichnet werden.

Für das Automatisieren der Montagevorgänge ist eine der Hauptaufgaben die Handhabung der Einzelteile, die als ungeordnete Menge in Form von Schüttgut zur Verfügung stehen und in eine vorgeschriebene Lage gebracht werden müssen. Diese Aufgabe wird mit Ordnungselementen gelöst, die in die Vorrichtung eingebaut sind und die Lage der ungeordnet ankommenden Einzelteile ausrichten. Bei der automatisierten Montage ist ein gängiges Ordnungsgerät ein Schwingförderer, der eine elektromagnetische Getriebeeinheit zur Erzeugung von Vibrationen und einen Schwingtopf mit Ordnungselementen von unterschiedlicher Größe und Funktion aufweist. Bei einem solchen Schwingförderer werden die Einzelteile in den Schwingtopf geschüttet, worauf sie längs Schikanen auf dem Innenumfang des Schwingtopfes durch Vibration entlanggleiten, wobei in Bewegungsrichtung der Einzelteile bestimmte Ordnungselemente an der Wand des Schwingtopfes fest eingebaut sind.

Aus der DE-OS 28 02 534 ist es bekannt, die einzelnen Ordnungselemente in einem Schwingtopf mechanisch umstellbar vorzusehen. Als Seitenabweiser sind hierbei Blattfedern und zum Umstellen Verschraubungen vorgesehen.

Der Erfindung liegt die Aufgabe zugrunde, eine Vorrichtung der eingangs angegebenen Art so auszubilden, daß eine möglichst einfache Umstellung auf eine andere Art von zu ordnenden Einzelteilen möglich ist.

Diese Aufgabe wird erfindungsgemäß durch die Merkmale im Kennzeichen des Anspruchs 1 gelöst. Dadurch, daß die in den Schwingtopf ragenden Schieber durch einen Elektromotor verstellbar sind, kann das Verstellen beispielsweise durch eine programmierte Steuerung vorgenommen werden, so daß sehr kurze Umrüstzeiten erreicht werden, um die Vorrichtung auf eine andere Art von Einzelteilen umzustellen. Die Vorrichtung selbst wird dadurch für verschiedene Einzelteile einsetzbar, während bei bekannten Vorrichtungen jeweils für eine bestimmte Art von Einzelteilen ein in bestimmter Weise ausgelegter Schwingtopf vorgesehen werden mußte. Hierdurch ergibt sich eine erhebliche Kostenersparnis. Weiterhin ergeben sich Vorteile hinsichtlich Platzbedarf und Lagerhaltungskosten, weil die Vorrichtung für verschiedene Arten von Einzelteilen eingesetzt werden kann.

Eine beispielsweise Ausführungsform der Erfindung wird nachfolgend anhand der Zeichnung näher erläutert.

Es zeigen
Fig. 1 in einer schematischen Darstellung eine Draufsicht auf einen Schwingkopf mit daran angebrachten Ordnungselementen gemäß der Erfindung,
Fig. 2 eine Teilansicht des Schwingtopfes mit einem Ordnungselement,
Fig. 3 eine Seitenansicht der Anordnung in Fig. 2,
Fig. 4 eine Draufsicht entsprechend Fig. 2 bei einer anderen Anordnung,
Fig. 5 eine Seitenansicht eines Schwingtopfes teilweise im Schnitt,
Fig. 6 eine Seitenansicht einer anderen Ausführungsform,
Fig. 7 eine Draufsicht auf die Ausführungsform nach Fig. 6,
Fig. 8 eine schematische Seitenansicht einer weiteren Ausführungsform, und
Fig. 9 in gleicher Darstellung eine weitere Ausführungsform.

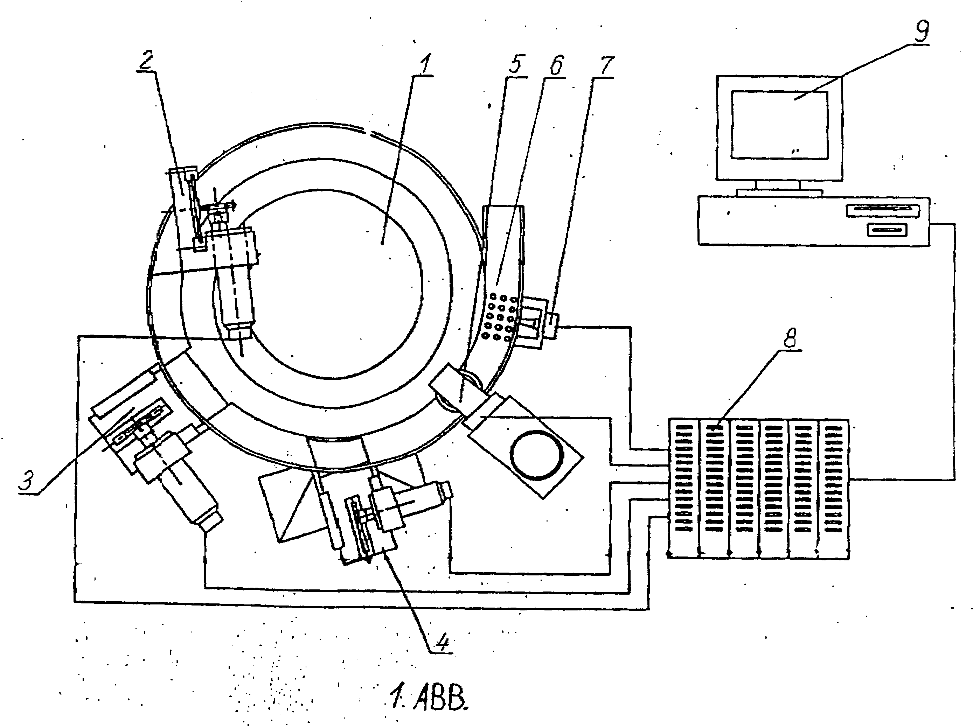

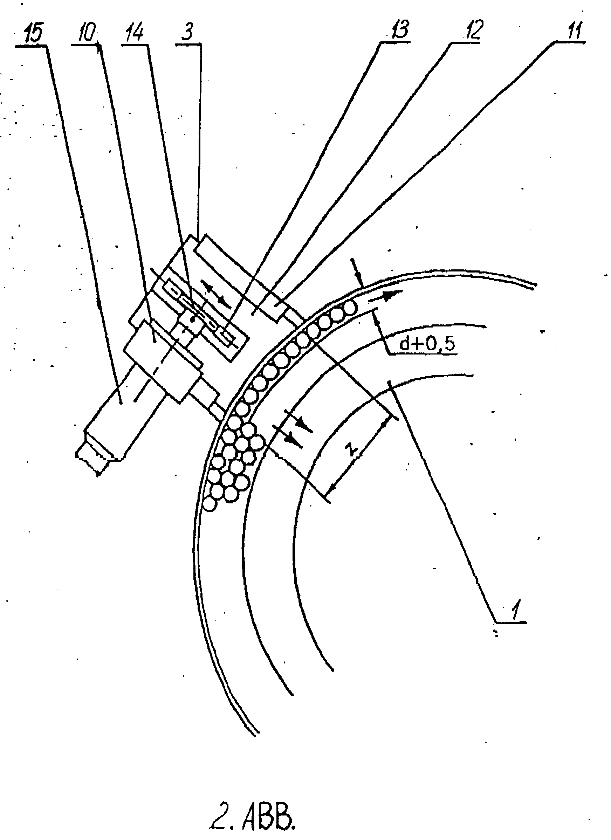

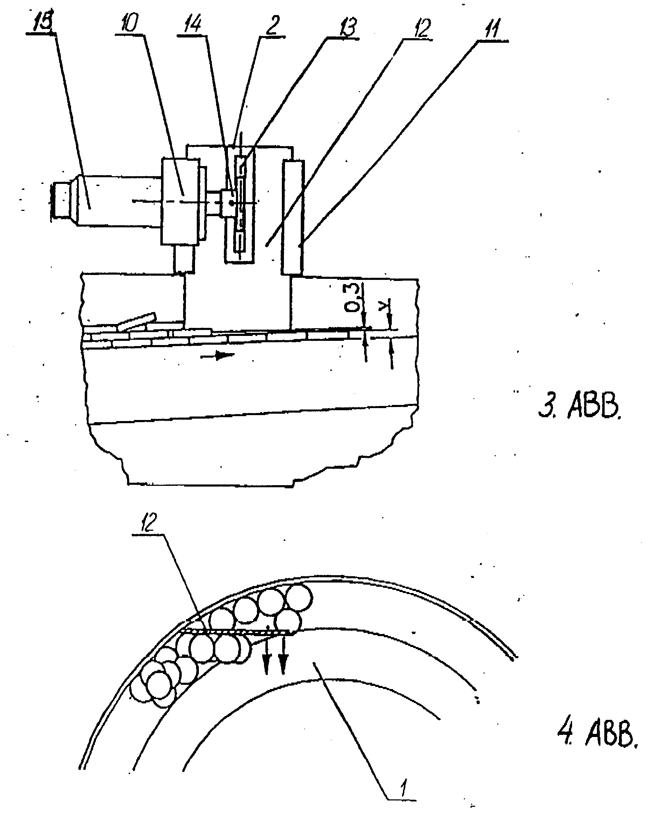

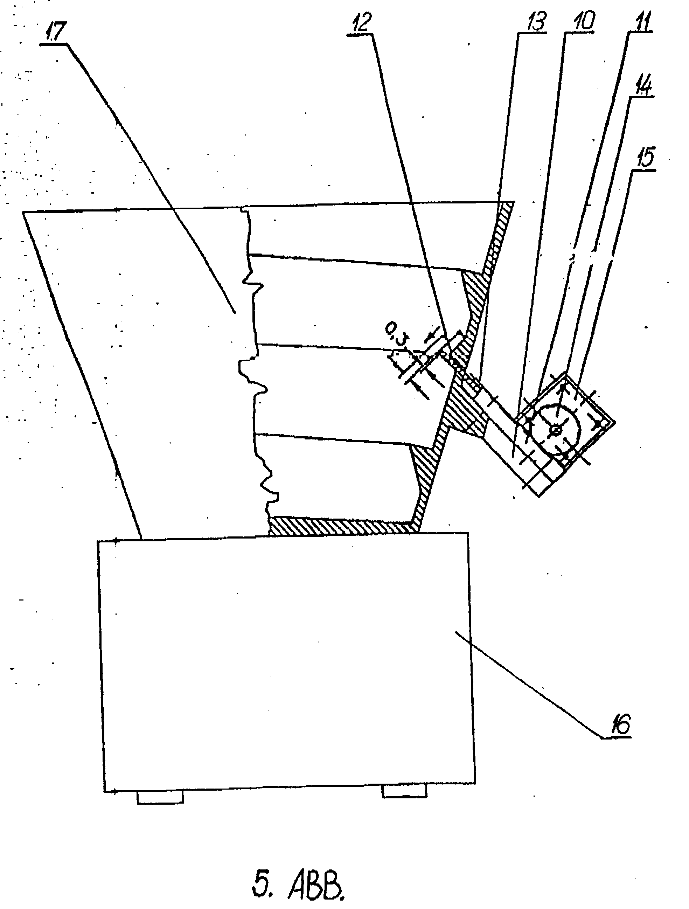

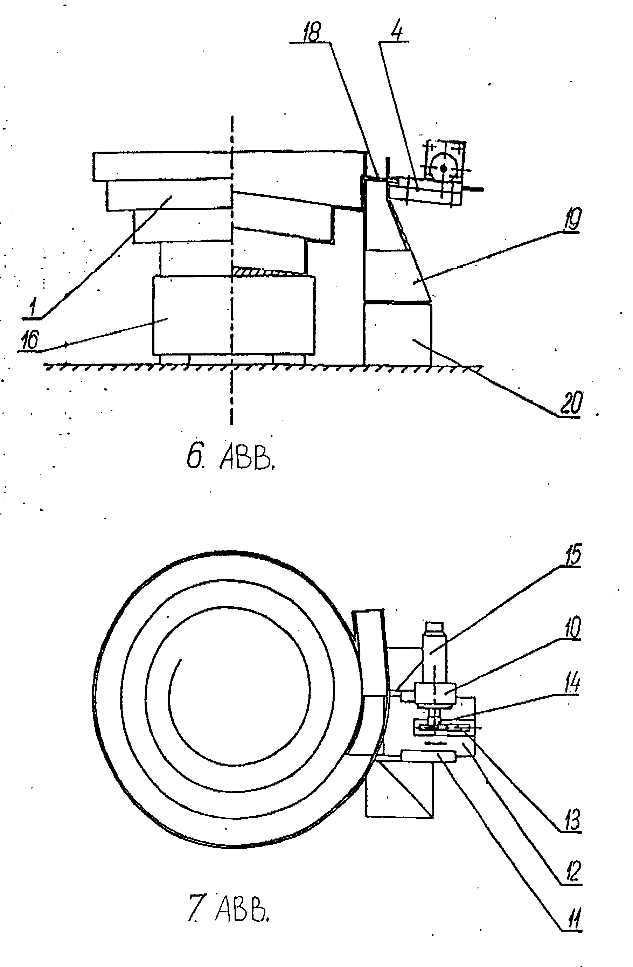

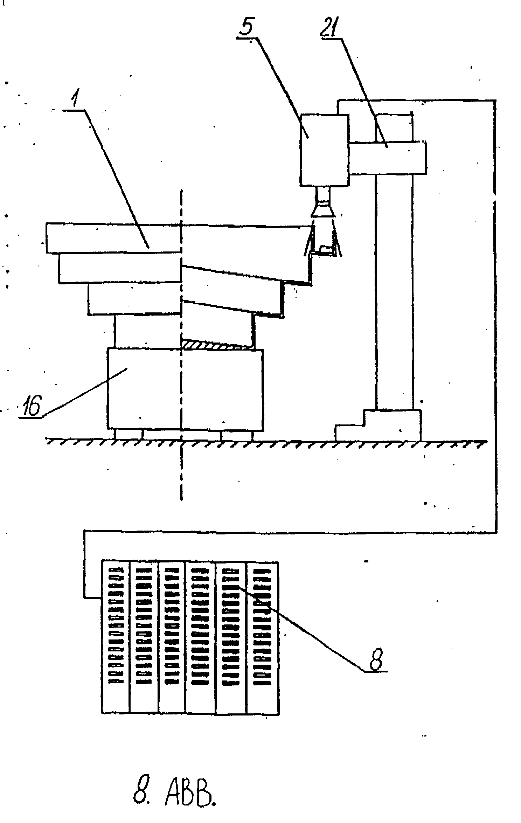

In den Fig. ist mit 1 ein Schwingtopf bezeichnet, der auf einer Vibratoreinheit angeordnet ist und auf dem Innenumfang stufen- oder kegelförmig gestaltet ist. Bei der Anordnung nach Fig. 1 sind am Schwingtopf 1 mehrere Ordnungselemente 2, 3 und 4 angebracht. Das Ordnungselement 2 dient zum Ausrichten der Einzelteile in einer Schicht, wie dies Fig. 3 im einzelnen zeigt. Das Ordnungselement 3 dient zum Ausrichten der Einzelteile in einer Reihe, wie dies Fig. 2 zeigt. Das Ordnungselement 4 dient zum Entleeren des Schwingtopfes, wie Fig. 6 zeigt. Mit 5 ist ein Modulelement bezeichnet, das für die Form- und/oder Farberkennung dient. Auf der Auslauframpe 6 des Schwingtopfes 1 ist eine pneumatische Abblasvorrichtung 7 vorgesehen.

Die Ordnungselemente 2, 3 und 4 sowie die Modulelemente 5 und 7 sind jeweils an eine speicherprogrammierbare Steuerung 8 angeschlossen, die mit einem Programmiergerät, beispielsweise einem Personalcomputer zum Programmieren der Steuerung 8 verbunden ist.

Fig. 2 zeigt in der Draufsicht das Ordnungselement 3, das auf dem Außenumfang des Schwingtopfes 1 mittels eines Befestigungsbackens 10 horizontal befestigt ist. Dieses Ordnungselement weist einen verstellbaren Schieber 12 auf, der durch eine schlitzförmige Ausnehmung in der Wand des Schwingtopfes in das Innere des Schwingtopfes hineinragt und mit seinem Endabschnitt ein Leitblech für die bei diesem Ausführungsbeispiel kreisscheibenförmigen Einzelteile bildet, um diese in einer Reihe anzuordnen. Der Schieber 12 ist in beidseitig angeordneten Führungsteilen 11 in einer Nut geführt. Diese Führungsteile 11 können mit den Befestigungsbacken 10 eine Einheit bilden. Der Schieber 12 ist mit einer Zahnleiste 13 versehen, die mit einem Zahnrad 14 in Eingriff steht, das von einem am Befestigungsbacken 10 angebrachten Elektromotor 15 antreibbar ist.

Die Breite Z des in Pfeilrichtung verschiebbaren Schiebers 12 ist entsprechend der Art der zu ordnenden Einzelteile ausgelegt. Der Abstand von der Behälterwand ist bei dem dargestellten Ausführungsbeispiel auf d + 0,5 ausgelegt, wobei d der Durchmesser der Einzelteile ist. Wenn der Schieber 12 weiter nach innen in den Schwingtopf 1 hineinverschoben wird, kann der Abstand zwischen Wand des Schwingtopfes und Leitblech entsprechend vergrößert werden, um Einzelteile mit größerem Durchmesser ausrichten zu können.

Fig. 3 und 4 zeigen die Anordnung des Ordnungselementes 2, das so am Schwingtopf 1 ausgesetzt ist, daß der plattenförmige Schieber 12 von oben in den Schwingtopf hineinragt und die Einzelteile auf einer Stufe des Schwingtopfes in einer Schicht ausrichtet. Das Ordnungselement 2 hat den gleichen Aufbau wie das Ordnungselement 3, wobei lediglich die Form des Schiebers 12 wegen der vertikalen Anordnung anders ausgelegt ist. Die Kante des Schiebers hat einen Abstand V + 0,3 von der Stufenfläche des Schwingtopfes, wobei V die Dicke der scheibenförmigen Einzelteile ist. Durch den Doppelpfeil in den Figuren 2 und 4 ist die Abweisrichtung der Einzelteile durch den Schieber 12 angegeben.

Fig. 5 zeigt einen kegelförmigen Schwingtopf 17 auf einer Vibrationseinheit 16, wobei auf dem Außenumfang des Schwingtopfes 17 schräg ein dem Ordnungselement 2 entsprechendes Ordnungselement mittels des Befestigungsbackens 10 befestigt ist. Hierbei ragt der plattenförmige Schieber 12 durch einen Schlitz in das Innere des Schwingtopfes 17, wobei durch den in einem bestimmten Winkel zur Wand des Schwingtopfes eingestellten Schieber 12 Einzelteile in einer Reihe ausgerichtet werden können. Durch Verdrehen des Zahnrades 14 über den Elektromotor 15 kann die Länge variiert werden, über die der Schieber 12 in den Schwingtopf hineinragt.

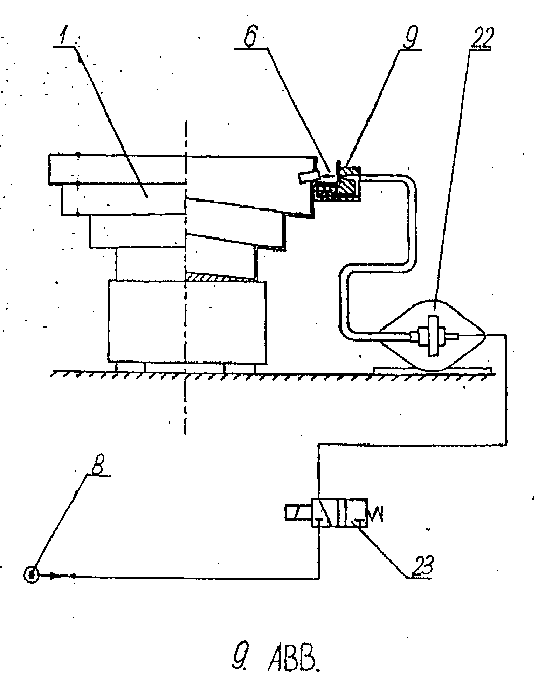

Fig. 6 und 7 zeigen das Ordnungselement 4, das den gleichen Aufbau wie die Ordnungselemente 2 und 3 hat, wobei der Schieber 12 als Verschlußelement über einer Öffnung 18 in der Auslauframpe des Schwingtopfes 1 dient. Unter der Entleerungsöffnung 18 ist eine Gleitbahn 19 mit einem Auffangbehälter 20 angeordnet. Durch Verschieben des Schiebers 12 kann die Entleerungsöffnung 18 freigegeben und verschlossen werden. Dieses Ordnungselement 4 ist vorgesehen, um eine Restmenge von Einzelteilen aus dem Schwingtopf zu entleeren.

Fig. 8 zeigt eine über einer Rampe des Schwingtopfes 1 angeordnete Einheit 5 für die Form- und/oder Farberkennung der Einzelteile, die mit der speicherprogrammierbaren Steuerung 8 verbunden ist. Mit 21 ist der Ständer für diese Einheit 5 bezeichnet.

Fig. 9 zeigt die an der Auslauframpe 6 des Schwingtopfes 1 angeordnete pneumatische Abblaseinrichtung 7 mit einer Einrichtung 22 für die Druckluftzuführung, die mit einem elektropneumatischen Ventil 23 verbunden ist, das von der Steuerung 8 gesteuert wird.

Durch die gemeinsame Steuerung der einzelnen Ordnungselemente und der weiteren am Schwingtopf vorgesehenen Einrichtungen kann eine schnelle Umstellung auf eine andere Art von Einzelteilen vorgenommen werden. Durch entsprechende Programmierung der Steuerung 8 bedarf es lediglich der Eingabe der Art der zu ordnenden Einzelteile, worauf die Vorrichtung selbsttätig auf die betreffenden Abmessungen eingestellt wird, ohne daß es einer manuellen Einstellung bedarf. Hierbei werden die Schieber 12 der einzelnen Ordnungselemente 2, 3 und 4 entsprechend verstellt und die Betätigung der Einrichtungen 5 und 7 gesteuert.

Wenn wegen einer Umstellung auf andere Einzelteile das Entleeren des Schwingtopfes 1 erforderlich ist, wird das Ordnungselement 4 entsprechend angesteuert, so daß die Restmenge an Einzelteilen aus dem Schwingtopf in den Behälter 20 entleert wird. Durch einen nicht dargestellten Sensor, der neben dem Ordnungselement 4 angeordnet werden kann, ist es möglich, die Stückzahl der abzuführenden Einzelteile festzustellen, und diese im Programmiergerät 9 entsprechend vorzugeben. Nach Erreichen der vorgegebenen Stückzahl wird das Ordnungselement 4 durch die Steuerung 8 zur Freigabe der Entleerungsöffnung 18 angesteuert.

Durch die Einrichtung 5 werden die Einzelteile vor dem Austritt aus dem Schwingtopf 1 kontrolliert, wobei die entsprechend der Form und/oder Farbe abgegebenen Signale von der Steuerung 8 ausgewertet werden. Wird ein Einzelteil als fehlerhaft erkannt, so wird ein entsprechendes Steuersignal an die pneumatische Abblaseinrichtung 7 gegeben, um dieses Einzelteil auszusortieren. Auch solche Einzelteile, die nicht in der erforderlichen Lage ankommen, können hierbei aussortiert werden, wobei die aussortierten Einzelteile in den Schwingtopf 1 zurückfallen.

## Patentansprüche

1. Vorrichtung zum Ordnen bzw. Ausrichten von schüttfähigen Kleinteilen, mit einem mit Schikanen ausgerichteten Schwingtopf und an diesem angebrachten Ordnungselementen,
**dadurch gekennzeichnet,**
daß die Ordnungselemente (2,3,4) mit einem durch einen Elektromotor (15) verstellbaren Schieber (12) versehen sind, der in den Schwingtopf hineinragt.

2. Vorrichtung nach Anspruch 1,
**dadurch gekennzeichnet,**
daß jedes Ordnungselement (2,3,4) durch einen Befestigungsbacken (10) am Schwingtopf (1) befestigbar ist und am Schieber (12) eine Zahnleiste (13) angebracht ist, mit der ein vom Elektromotor (15) angetriebenes Zahnrad (14) in Eingriff steht.

3. Vorrichtung nach Anspruch 2,
**dadurch gekennzeichnet,**
daß der Schieber (12) durch eine schlitzförmige Ausnehmung in der Wand des Schwingtopfes (1) in diesen hineinragt.

4. Vorrichtung nach den vorhergehenden Ansprüchen,
**dadurch gekennzeichnet,**
daß der Schieber (12) zum Abdecken und Freigeben einer Entleerungsöffnung (18) des Schwingtopfes (1) vorgesehen ist.

5. Vorrichtung nach den vorhergehenden Ansprüchen,
**dadurch gekennzeichnet,**
daß die Ordnungselemente (2,3,4,5) mit einer elektronischen Steuereinrichtung (8) verbunden sind.

6. Vorrichtung nach Anspruch 5,
**dadurch gekennzeichnet,**
daß die elektronische Steuereinrichtung (8) mit einem Programmiergerät (9) verbunden ist.

7. Vorrichtung nach den Ansprüchen 5 und 6,
**dadurch gekennzeichnet,**
daß an die elektronische Steuereinrichtung (8) eine Einheit (5) für die Form- und/oder Farberkennung der Einzelteile sowie eine an der Auslauframpe (6) des Schwingtopfes (1) angeordnete pneumatische Abblaseinrichtung (7) angeschlossen ist.
